# EUROPÄISCHE PATENTSCHRIFT

(11) **EP 3 181 248 B1**
(45) Veröffentlichungstag und Bekanntmachung des Hinweises auf die Patenterteilung: **10.01.2018**
(21) Anmeldenummer: 15201051.8
(22) Anmeldetag: 18.12.2015
(51) Int. Cl.: B21B 37/26, B21D 28/06

(54) **VERFAHREN UND ANLAGE ZUR HERSTELLUNG EINER BLECHPLATINE**
METHOD AND INSTALLATION FOR THE PRODUCTION OF A SHEET METAL PLATE
PROCEDE ET INSTALLATION DE FABRICATION D'UNE PLATINE DE TOLE

(43) Veröffentlichungstag der Anmeldung: 21.06.2017
(73) Patentinhaber: Muhr und Bender KG, 57439 Attendorn (DE)
(72) Erfinder: SCHNEIDER, DR., Christoph, 57368 Lennestadt (DE); EICHNER, Harald, 53773 Hennef (DE); IVO, Joachim, 57368 Lennestadt (DE)
(74) Vertreter: Neumann Müller Oberwalleney & Partner Patentanwälte

(56) Entgegenhaltungen:
- EP-A2- 2 949 787
- DE-A1-102011 001 320
- DE-B3-102012 110 972

## Beschreibung

Die Erfindung betrifft ein Verfahren und eine Vorrichtung zur Herstellung von Blechplatinen mit verschiedenen Blechdicken.

Aus der DE 10 2012 110 972 B3 ist ein Verfahren zum Herstellen eines Erzeugnisses aus flexibel gewalztem Bandmaterial bekannt. Das flexibel gewalzte Bandmaterial wird anschließend elektrolytisch beschichtet und wärmebehandelt. Aus dem flexibel gewalzten Bandmaterial werden Platinen durch mechanischen Zuschnitt oder Laserschweißen hergestellt. Die so hergestellten Platinen können anschließend im Wege eines Umformverfahrens zu einem Formteil weiterbearbeitet werden, das beispielsweise als Strukturbauteil für ein Kraftfahrzeug gestaltet sein kann.

Aus der DE 10 2012 014 258 A1 ist ein Verfahren zur Herstellung eines Bauteils aus Stahl mit verminderter Kantenrissempfindlichkeit bekannt. Das Bauteil wird durch Umformen einer Blechplatine aus Stahl hergestellt, bei dem die Platine zuvor aus einem Bandmaterial zugeschnitten und anschließend zu einem Bauteil umgeformt wird. Der Zuschnitt der Platine erfolgt bei einer Temperatur oberhalb der Raumtemperatur und unterhalb der Ac1-Umwandlungstemperatur. Die Platine kann flexibel mit unterschiedlichen Dicken gewalzt sein.

Aus der WO 2010/085486 A1 ist ein Verfahren und eine Anlage zum Laserschneiden von Platinen aus einem Stahlband bekannt.

Aus der EP 2 420 344 B1 ist ein Verfahren zum Herstellen eines Konturschnitts aus einem Blechband bekannt. Das Blechband wird bezüglich seiner Breite in mindestens drei Bearbeitungsstreifen gegliedert, wobei jedem Bearbeitungsstreifen eine Laserschneideinrichtung zugeordnet ist. Der Arbeitsbereich der ersten Laserschneideinrichtung schließt sich gegenüber dem Arbeitsbereich der zweiten Laserschneideinrichtung stromauf- oder stromabwärts an. Die Laserschneideinrichtungen werden so gesteuert, dass ein erster Teilabschnitt des Konturschnitts mittels der stromaufwärtigen Laserschneideinrichtung hergestellt wird und ein zweiter Teilabschnitt zur Fertigstellung des Konturschnitts von der stromabwärtigen Laserschneideinrichtung.

Der vorliegenden Erfindung liegt die Aufgabe zugrunde, ein Verfahren zur Herstellung von Blechplatinen mit verschiedenen Blechdicken vorzuschlagen, das eine große Prozessstabilität bietet und eine hohe Fertigungsgenauigkeit der herzustellenden Blechplatinen beziehungsweise eine geringe Ausschussrate gewährleistet. Die Aufgabe besteht ferner darin, eine entsprechende Anlage vorzuschlagen, mit der Blechplatinen prozesssicher und mit hoher Genauigkeit hergestellt werden können.

Eine Lösung besteht in einem Verfahren zur Herstellung einer Blechplatine, mit den Schritten: Flexibles Walzen eines Bandmaterials aus einem metallischen Werkstoff, wobei ein Dickenprofil mit unterschiedlichen Blechdicken über der Länge des Bandmaterials erzeugt wird, derart, dass hintereinanderliegende Bereiche des flexibel gewalzten Bandmaterials jeweils mit einem Solldickenprofil einer hieraus auszuschneidenden Blechplatine korrespondieren; Ermitteln eines Messdickenprofils von mehreren hintereinander liegenden Bereichen des Bandmaterials; Berechnen einer Sollposition in dem Bandmaterial für eine aus dem Bandmaterial auszuschneidende Blechplatine in Abhängigkeit von dem generierten Messdickenprofil von zumindest zwei hintereinander liegenden Bereichen des Bandmaterials; Schneiden des flexibel gewalzten Bandmaterials mittels zumindest einer Schneidvorrichtung entlang der Sollposition zum Erzeugen der Blechplatine.

Ein Vorteil besteht darin, dass eine genaue Zuordnung der Sollkonturlage für die aus dem Bandmaterial auszuschneidende Blechplatine auf das gemessene Blechdickenprofil des Bandmaterials erfolgen kann. Auf diese Weise wird eine hohe Fertigungsgenauigkeit der herzustellenden Blechplatinen erreicht, beziehungsweise der Anteil von aufgrund von Fertigungsungenauigkeiten nicht brauchbarem Ausschuss wird reduziert. Durch das dem Strahlschneidprozess vorgelagerte Vermessen des Bandmaterials können gegebenenfalls Bereiche der Platine, die hinsichtlich des Dickenverlaufs nicht den geometrischen Vorgaben entsprechen, unbearbeitet gelassen werden. Hierdurch ergibt sich eine besonders hohe Effizienz des Verfahrens, da kein unnötiger Ausschuss erzeugt wird.

Als Ausgangsmaterial für das Flexible Walzen wird Bandmaterial aus einem metallischen Werkstoff verwendet. Hiermit sind insbesondere Werkstoffe gemeint, die zumindest ein metallisches Element beziehungsweise eine Legierung aus metallischen Elementen beinhalten. In der industriellen Fertigung wird häufig Bandmaterial aus Stahl beziehungsweise aus einer Stahllegierung verwendet, wobei auch Bandmaterial aus anderen Metallen, wie Aluminium beziehungsweise Aluminiumlegierungen eingesetzt werden. Es kann Warmband oder Kaltband verwendet werden, wobei diese Begriffe im Sinne der Fachsprache für unterschiedliche Bandbreitenbereiche zu verstehen sind. Unter Warmband wird ein Walzstahlfertigerzeugnis (Stahlband) verstanden, das durch Walzen nach vorherigem Erwärmen erzeugt wird. Mit Kaltband ist ein kaltgewalztes Stahlband (Flachstahl) gemeint. Als kaltgewalzt wird Flachstahl bezeichnet, dessen letzte Dickenabnahme durch Walzen ohne vorhergehendes Erwärmen erfolgt.

Das Bandmaterial mit im Wesentlichen einheitlicher Blechdicke wird im Rahmen des Flexiblen Walzens durch Verändern des Walzspalts zu Bandmaterial mit variabler Blechdicke über der Länge ausgewalzt. Dabei wird das Bandmaterial derart gewalzt, dass bereichsweise erzeugte Dickenprofile des Bandmaterials jeweils zu einem Solldickenprofil einer hieraus herzustellenden Platine korrespondieren. Hiermit ist insbesondere gemeint, dass ein in einem Bereich durch Flexibles Walzen erzeugtes Dickenprofil dem Solldickenprofil der hieraus auszuschneidenden Platinen zumindest im Wesentlichen entspricht, das heißt unter Berücksichtigung von Fertigungs- und Lagetoleranzen. Im Rahmen der vorliegenden Offenbarung ist mit einem Bereich des Bandmaterials ein geometrisch definierbarer Teil des Bandmaterials gemeint, aus dem eine zugehörige Platine ausgeschnitten wird. Die einzelnen Bereiche sind hintereinander im Bandmaterial angeordnet. Es ist insbesondere vorgesehen, dass die einzelnen Bereiche des Bandmaterials jeweils mehrere Abschnitte mit unterschiedlicher Dicke haben. Diese durch das Flexible Walzen erzeugten Abschnitte unterschiedlicher Dicke erstrecken sich quer zur Längsrichtung beziehungsweise zur Walzrichtung des Bandmaterials. Das Bandmaterial kann nach dem Flexiblen Walzen auf einfache Weise wieder zum Coil aufgewickelt werden und an anderer Stelle der Weiterverarbeitung zugeführt werden, oder es kann direkt weiterverarbeitet werden.

Das Ermitteln eines Dickenprofils erfolgt insbesondere auf Basis von Messungen der Dicke über der Länge des Bandmaterials. Einer gemessenen Längenposition beziehungsweise Wegposition des Bandmaterials wird eine zugehörige Dickenposition zugeordnet, welche ein Positionspaar bilden. Zur Messung können ein Dickensensor und ein Wegsensor verwendet werden. Das Messen der Dicke über der Länge des Bandmaterials kann inkrementell, das heißt in Schritten, oder fortlaufend erfolgen. Beim schrittweisen Messen werden je auszuschneidender Blechplatine mehrere Positionen entlang der Längsrichtung gemessen. Aus den gemessenen Dicken- und zugehörigen Positionswerten wird dann das Messdickenprofil generiert. Eine besonders hohe Prozesssicherheit und genaue Fertigung wird durch kontinuierliches Erfassen der Dicke über der Länge des Bandmaterials erreicht. Dabei wird fortlaufend jeder Längenposition des Bandmaterials eine Dickenposition zugeordnet, so dass für einen vermessenen Bandbereich ein vollständiges Messdickenprofil über der Länge vorliegt. Dieses gemessene Dickenprofil kann dann rechnerisch mit dem Solldickenprofil der auszuschneidenden Blechplatine abgeglichen werden, so dass die Lage des anzusetzenden Strahlschnitts individuell an die geometrischen Rahmenbedingungen angepasst werden kann. Die Positionierung beziehungsweise Synchronisierung der Konturlage der aus dem Band auszuschneidenden Platinen zum gegebenen Blechdickenprofil kann mittels geeigneter Berechnungsalgorithmen erfolgen. Auf diese Weise kann eine Lageoptimierung der Bauteile im Band erfolgen, was zu einem stabilen Prozess mit hoher Fertigungsgenauigkeit führt.

In beispielhafter Konkretisierung kann die Dicke über der Länge des Bandmaterials in einem ersten und einen hieran anschließenden zweiten Bereich des Bandmaterials erfasst werden und das Schneiden der ersten Blechplatine aus dem ersten Bereich in Abhängigkeit von dem Messdickenprofil des ersten und des zweiten Bereichs erfolgen.

Dieses Prinzip lässt sich in allgemeiner Form weiter fortsetzen. So können auch die Messwerte von mehr als zwei Platinen-Bereichen des Bandmaterials bei der Festlegung der Schnittkontur der Schneidvorrichtung herangezogen werden. Beispielsweise können die Schnittkonturen von aufeinanderfolgenden Gruppen von Platinen, beispielsweise von drei Platinen, unter Berücksichtigung des Messdickenprofils von allen zu dieser Gruppe zugehörigen Bandbereichen bestimmt werden.

Zum Schneiden einer Platine aus dem Bandmaterial können eine oder mehrere Schneidvorrichtungen verwendet werden. Bei Verwendung mehrerer Schneidvorrichtungen können diese parallel zueinander, das heißt in Bezug auf die Bandbreite nebeneinander, und/oder hintereinander, das heißt in Bezug auf die Bandlängserstreckung hintereinander angeordnet sein. Zumindest ein Teilschnitt zum Trennen einer Platine aus dem Bandmaterial kann mittels eines Strahls erfolgen. In diesem Fall ist zumindest eine der Schneidvorrichtungen als Strahlschneidvorrichtung gestaltet. Es ist aber auch denkbar, dass zumindest ein Teilschnitt zum Trennen einer Platine aus dem Bandmaterial mechanisch mittels eines Stanz- oder Schneidwerkzeugs mit definierter Schneide erfolgt.

Nach einer möglichen Verfahrensführung wird das Bandmaterial während des Strahlschneidens in Längsrichtung des Bandmaterials gespannt. Durch diese Maßnahme wird eine hohe Lagegenauigkeit des Bandmaterials und damit hohe Fertigungsgenauigkeit der hieraus auszuschneidenden Blechplatinen erreicht.

Nach einer Ausgestaltung kann die zumindest eine Strahlschneidvorrichtung entlang mehrerer Achsen bewegt werden, wobei insbesondere vorgesehen ist, dass die Bewegung entlang einer Achse unabhängig von der Bewegung einer anderen Achse steuerbar ist. Auf diese Weise wird eine genaue Positionierung und hohe Fertigungsgenauigkeit erreicht.

Es können mehrere Schneidvorrichtungen zum Strahlschneiden beziehungsweise mechanischen Schneiden der Blechplatinen aus dem Bandmaterial vorgesehen sein. Dabei können mehrere Schneidvorrichtungen gleichzeitig an dem Konturschnitt derselben Blechplatine arbeiten, oder es können mehrere Blechplatinen gleichzeitig mittels einer jeweils zugehörigen Schneidvorrichtung bearbeitet werden.

Das Verfahren kann kontinuierlich durchgeführt werden, das heißt, dass das Strahlschneiden unter Vorschub des Bandmaterials durchgeführt wird. In diesem Fall bewegen sich die Schneidvorrichtungen mit dem Bandmaterial mit. Alternativ kann das Verfahren auch diskontinuierlich durchgeführt werden, das heißt, es erfolgt ein Vorschub des zu schneidenden Bandbereichs zur Schneidvorrichtung, dann wird der Vorschub gestoppt, und das Schneiden der Blechplatine aus dem Bandmaterial erfolgt bei stillstehendem Band. Nach dem Herausschneiden der Blechplatine wird das Bandmaterial zur Herstellung der nächsten Platine vorgeschoben. Letztere Verfahrensführung eignet sich insbesondere für ein mechanisches Schneiden.

Nach einer möglichen Ausgestaltung kann das Strahlschneiden derart durchgeführt werden, dass eine strahlgeschnittene Platine mittels zumindest einem Steg zunächst mit dem Bandmaterial verbunden bleibt. Das vollständige Trennen der Blechplatine vom verbleibenden Bandmaterial kann anschließend in einem nachgelagerten Schritt durchgeführt werden. Dabei wird der zumindest eine Steg mittels einer weiteren Schneidvorrichtung, die der ersten Schneidvorrichtung in Transportrichtung des Bandmaterials nachgelagert ist, durchtrennt. In Konkretisierung kann das Strahlschneiden derart durchgeführt werden, dass im Rahmen der ersten Schneidbearbeitung mehrere Stege vorgesehen werden, über welche die teilgeschnittene Platine mit dem Bandmaterial zunächst verbunden bleibt. Dabei ist es günstig, wenn zumindest ein erster Steg in einem in Bezug auf die Bandvorschubrichtung vorderen ersten Drittel der strahlgeschnittenen Platine angeordnet ist und zumindest ein zweiter Steg in einem in Bezug auf die Bandvorschubrichtung hinteren Drittel der Strahlgeschnittenen Platine angeordnet ist. Auf diese Weise können Vorschubkräfte vom Bandmaterial auf die teilbeschnittene Platine übertragen werden, so dass die Platine genau positioniert ist. Der erste Steg und/oder der zweite Steg können so gestaltet sein, dass sie sich im Wesentlichen in Längsrichtung des Bandmaterials erstrecken.

Nach einer möglichen Konkretisierung kann zum Strahlschneiden ein Laserstrahl verwendet werden, das heißt die Strahlschneidevorrichtung ist in Form einer Laserstrahlschneidevorrichtung gestaltet. Es versteht sich jedoch, dass auch andere Strahlschneideverfahren einsetzbar sind, wie beispielsweise Wasserstrahlschneiden. Mit der Strahlschneidvorrichtung können Schneidparameter eingestellt und/oder während des Schneidprozesses gesteuert werden. Solche den Schneidprozess beeinflussende Schneidparameter sind beispielsweise Strahlleistung, Fokus des Strahls, Vorschubgeschwindigkeit, Ausgasdrücke und/oder andere technische Parameter. Insbesondere kann vorgesehen sein, dass zumindest einer der Schneidparameter der Strahlschneidvorrichtung auf die Blechdicke und/oder die Materialeigenschaften des metallischen Werkstoffs eingestellt wird beziehungsweise während des Schneidprozesses in Abhängigkeit von den gemessenen Blechdicken des Bandmaterials gesteuert wird. Beispielsweise können dickere Bandabschnitte mit anderen Parametern beschnitten werden als dünnere Bandabschnitte, so dass der Schneidprozess insgesamt effizient und bedarfsgerecht durchgeführt werden kann. Dies gilt selbstverständlich auch für mechanisches Schneiden der Platinen, bei dem das mechanische Schneiden beeinflussende Schneidparameter, wie beispielsweise Schneidkraft oder Schnittgeschwindigkeit, in Abhängigkeit von der Blechdicke gesteuert werden können.

Es können weitere Verfahrensschritte vorgesehen sein, wie das Aufbringen eines Korrosionsschutzes auf die Blechplatinen beziehungsweise das Bandmaterial. Nach einer ersten Möglichkeit kann das Bandmaterial bereits vor dem Flexiblen Walzen beschichtet werden, was jedoch zur Folge hat, dass die Korrosionsschutzschicht aufgrund des nachfolgenden Flexiblen Walzens über der Länge des Bandmaterials eine unterschiedliche Dicke erhält. Nach einer zweiten Möglichkeit kann die Korrosionsschutzschicht auch nach dem Flexiblen Walzen aufgebracht werden. In diesem Fall ist die Dicke der Korrosionsschutzschicht über der Länge des flexibel gewalzten Bandes im Wesentlichen konstant. In beiden Fällen wird der Korrosionsschutz vorzugsweise im Durchlaufverfahren aufgebracht. Hierfür wird das Bandmaterial vom Coil abgewickelt, im Durchlaufverfahren mit Korrosionsschutz versehen, und anschließend wieder zum Coil aufgewickelt, um dem jeweils nachfolgenden Verfahrensschritten zugeführt zu werden. Es versteht sich, dass das Bandmaterial auch direkt weiterbearbeitet werden kann, das heißt in abgewickeltem Zustand. Nach einer weiteren Möglichkeit können auch zunächst die Blechplatinen aus dem Bandmaterial herausgearbeitet und anschließend stückweise mit Korrosionsschutz versehen werden.

Die Blechplatinen können in nachfolgenden Fertigungsschritten weiterbearbeitet werden, beispielsweise zu einem Formteil umgeformt werden. Die Formteile können gehärtet werden. Alternativ können die Blechplatinen im Wege des Presshärtens auch in einem Werkzeug umgeformt und gehärtet werden.

Die Lösung der oben genannte Aufgabe besteht weiter in einer Anlage zur Herstellung einer Blechplatine, umfassend: eine Walzeinheit zum Flexiblen Walzen von Bandmaterial aus einem metallischen Werkstoff, insbesondere Stahlblech, und eine Schneideinheit zum Ausschneiden von einzelnen Blechplatinen aus dem Bandmaterial, wobei das Bandmaterial eine Vielzahl von hintereinander liegenden Bereichen aufweist, aus denen jeweils eine Blechplatine auszuschneiden ist; wobei die Schneideinheit eine Messvorrichtung zum Erfassen der Dicke des Bandmaterials in Längsrichtung des Bandmaterials, zumindest eine Schneidvorrichtung zum Schneiden des flexibel gewalzten Bandmaterials, und eine elektronische Steuereinheit zum Steuern der Schneidvorrichtung auf Basis von mittels der Messvorrichtung erfassten Messwerten aufweist, dadurch gekennzeichnet, dass im Betrieb der Abstand zwischen der Messvorrichtung und der Schneidvorrichtung größer als das Doppelte der Länge einer auszuschneidenden Blechplatine ist, so dass eine Sollposition für eine aus dem Bandmaterial herauszuarbeitende Blechplatine in Abhängigkeit von einem Messprofil von zumindest zwei hintereinander liegenden Bereichen des Bandmaterials bestimmbar ist. Die Anlage eignet sich somit zur Durchführung des oben genannten Verfahrens. Es ergeben sich insofern auch dieselben Vorteile, so dass diesbezüglich auf die obige Beschreibung Bezug genommen wird. Es versteht sich, dass alle verfahrensmäßigen Merkmale auf die Anlage übertragbar sind, und umgekehrt, alle anlagenbezogenen Merkmale auf das Verfahren. Die Anlage ermöglicht eine Lageoptimierung der auszuschneidenden Blechplatinen im Bandmaterial, das heißt eine genaue positionsmäßige Einstellung der Sollkontur der aus dem Bandmaterial auszuschneidenden Blechplatine relativ zum Blechdickenprofil des Bandmaterials. Die Sollkontur der auszuschneidenden Blechplatinen wird erst nach der Vermessung der Blechdicke über der Länge festgelegt, so dass insgesamt eine hohe Fertigungsgenauigkeit erreicht wird.

Vorzugsweise umfasst die Schneidvorrichtung zumindest eine Strahlschneidvorrichtung, wobei es sich versteht, dass in Ergänzung oder alternativ auch zumindest eine mechanische Schneidvorrichtung vorgesehen sein kann. Nach einer möglichen Konkretisierung können mehrere Strahlschneidevorrichtungen vorgesehen sein. Die Strahlschneidevorrichtungen können derart gestaltet und von der elektronischen Steuereinheit ansteuerbar sein, dass mehrere Blechplatinen gleichzeitig aus dem Bandmaterial ausgeschnitten werden können. Alternativ oder in Ergänzung können auch mehrere Schneidvorrichtungen vorgesehen sein, die gleichzeitig eine Blechplatine ausschneiden.

Nach einer weiteren Ausgestaltung kann eine Vorschubanordnung zum Vorschub des Bandmaterials vorgesehen sein. Die Vorschubanordnung kann eine erste Vorschubvorrichtung aufweisen, die vor der Schneidvorrichtung angeordnet ist, und eine zweite Vorschubvorrichtung, die hinter der Schneidvorrichtung angeordnet ist. Die Vorschubanordnung ist vorzugsweise so steuerbar, dass das Bandmaterial im Bereich des Schneidens gespannt ist.

Die Schneideanlage beziehungsweise das Verfahren zum Ausschneiden kann in weiterer Konkretisierung folgende Merkmale umfassen: Das Coil kann von einem Coilladestuhl, einer Vorrichtung zum Zwischenlagern des Coils, einer Haspel zugeführt werden. Mittels der Haspel wird das Coil abgehaspelt und der Endabschnitt des Coils wird mit entsprechenden Hilfsmitteln an der Richteinheit eingeführt und gemäß den Vorgaben gerichtet. Es kann ein Bandspeicher vorgesehen sein, der Toleranzen und Schwankungen im Bearbeitungsprozess ausgleicht. Hierfür ist der Bandspeicher so ausreichend dimensioniert, das die maximalen Vorschublängen und Geschwindigkeiten bei der Bearbeitung voll abgedeckt werden. Zwischen dem Bandspeicher und der Messvorrichtung kann eine Bandberuhigungsvorrichtung vorgesehen sein, in der das Bandmaterial beruhigt beziehungsweise geglättet wird. Die Messvorrichtung umfasst eine Banddickenmessung und eine Bandlängenmessung. Der Vorschub des Bandmaterials erfolgt mittels einer Vorschubvorrichtung, die der Messvorrichtung vorgelagert ist. Die Zuführung beziehungsweises der Vorschub sind so gestaltet, dass im laufenden Betrieb Längentoleranzen aus dem Walzprozess ausgeglichen werden können. An den ersten Vorschub schließt sich ein Rollengang an, der zumindest die Doppelte Länge eines Platinenbereichs aufweist, um die erforderliche Messlänge zur Blechdickenmessung und Zuordnung der Konturlage mehrerer Platinen relativ zum Blechdickenprofil zu erzielen. Im Anschluss werden die Konturlagen im Band positioniert und die Position an die Schneidvorrichtung übermittelt. Es ist insbesondere vorgesehen, dass die Messung der Dicke und Längenwerte fortlaufend erfolgt und unmittelbar an die Steuerung der Schneidvorrichtung zum exakten Positionieren und Steuern der Schneidwerkzeuge weitergegeben wird. Es findet also eine fortlaufende Kontrolle statt, bei der die vollständige Bandlänge vermessen wird.

Bevorzugte Ausführungsbeispiele werden nachstehend anhand der Zeichnungsfiguren erläutert. Hierin zeigt
- Figur 1: ein erfindungsgemäßes Verfahren schematisch als Ablaufdiagramm;
- Figur 2: die Schneideanordnung aus Figur 1 schematisch als Detail;
- Figur 3: die Schneideanordnung aus Figur 1 schematisch als Detail in einer abgewandelten Ausführungsform;
- Figur 4: die Schneideanordnung aus Figur 1 schematisch als Detail in einer weiteren Ausführungsform;
- Figur 5: die Schneideanordnung aus Figur 1 schematisch als Detail in einer weiteren Ausführungsform;
- Figur 6: die Schneideanordnung aus Figur 1 schematisch als Detail in einer weiteren Ausführungsform; und
- Figur 7: das Verfahren nach Figur 1 schematisch als Ablaufdiagramm mit weiteren Verfahrensschritten.

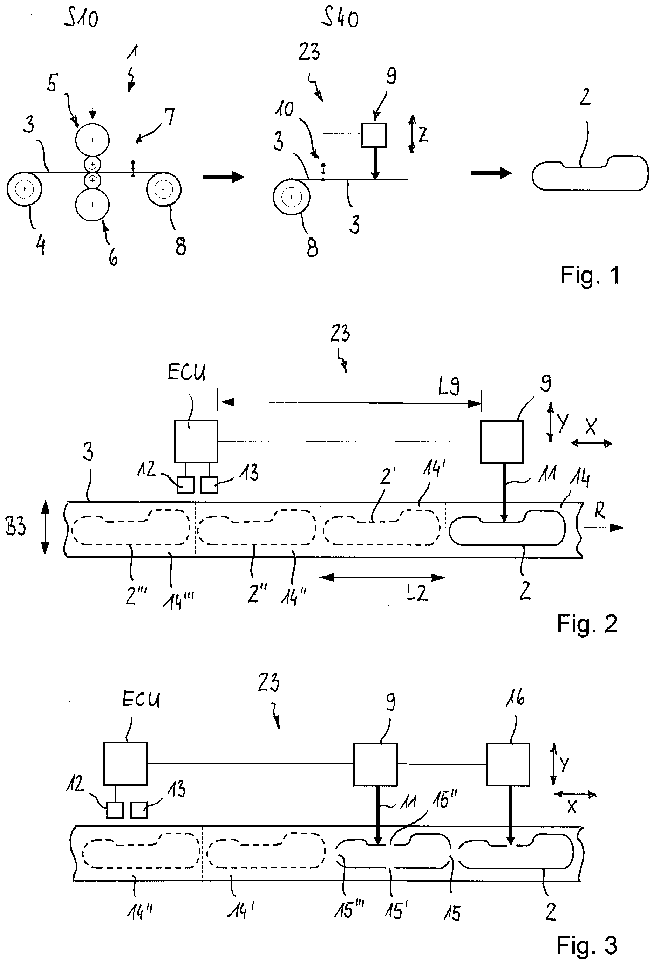

Die Figuren 1 bis 7 werden hinsichtlich ihrer Gemeinsamkeiten zunächst gemeinsam beschrieben. Es sind ein erfindungsgemäßes Verfahren sowie eine erfindungsgemäße Anlage zur Herstellung einer Blechplatine 2 aus flexibel gewalztem Bandmaterial 3 gezeigt. Als Ausgangsmaterial kann Warmband oder Kaltband aus einem metallischen Werkstoff, insbesondere aus einem härtbaren Stahlwerkstoff verwendet werden. Das Material kann als Spaltband oder als Band mit Naturkante vorliegen.

Im Verfahrensschritt S10 wird das Bandmaterial 3 mittels einer Walzeinheit 1 walzend bearbeitet, und zwar mittels flexiblem Walzen. Hierfür wird das Bandmaterial 3, das im Ausgangszustand auf einem Coil 4 aufgewickelt ist und vor dem flexiblen Walzen eine weitestgehend konstante Blechdicke über der Länge aufweist, mittels Walzen 5, 6 derart gewalzt, dass es längs der Walzrichtung eine variable Blechdicke erhält. Während des Walzens wird der Prozess überwacht und gesteuert, wobei die von einer Blechdickenmessung 7 ermittelten Daten als Eingangssignal zur Steuerung der Walzen 5, 6 verwendet werden. Nach dem flexiblen Walzen hat das Bandmaterial 3 in Walzrichtung unterschiedliche Dicken über der Länge. Das Bandmaterial 3 wird nach dem flexiblen Walzen wieder zum Coil 8 aufgewickelt, so dass es dem nächsten Verfahrensschritt zugeführt werden kann.

In einem nachgelagerten Verfahrensschritt S40 werden mittels einer Schneideeinheit 23 einzelne Blechplatinen 2 aus dem flexibel gewalzten Bandmaterial 3 ausgeschnitten. Die Schneideinheit 23, die auch als Schneidanordnung bezeichnet werden kann, umfasst eine Messvorrichtung 10, eine elektronische Regeleinheit (Electronic Control Unit, ECU) sowie eine oder mehrere Schneidvorrichtungen 9. Dabei erfolgt das Ausschneiden der Blechplatinen 2 aus dem Bandmaterial 3 durch einen Schneidprozess mittels der Schneidvorrichtung 9 unter Berücksichtigung von mittels der Messvorrichtung 10 gemessenen Größen. Die Schneidvorrichtung 9 ist insbesondere in Form einer Strahlschneidvorrichtung gestaltet, wobei das Heraustrennen der Platine 2 aus dem Bandmaterial in diesem Fall mittels eines Strahls 11 erfolgt. In Konkretisierung kann eine Laserstrahlschneidvorrichtung verwendet werden, wobei das Heraustrennen der Platine 2 aus dem Bandmaterial mittels eines oder mehrerer Laserstrahlens 11 erfolgt. Es versteht sich jedoch, dass grundsätzlich auch eine mechanische Schneidvorrichtung anstelle einer Strahlschneidvorrichtung zum Einsatz kommen kann.

Ein wichtiger Teilschritt zum Ausschneiden der Blechplatinen 2 ist das Messen der Dicke entlang der Länge des Bandmaterials 3. Die hierfür verwendete Messvorrichtung 10 ist der Strahlschneidvorrichtung 9 in Vorschubrichtung des Bandmaterials 3 vorgelagert. Die Messvorrichtung 10 umfasst zumindest einen Sensor 12 zum Erfassen einer die Dicke des Bandmaterials 3 repräsentierenden Größe und einen Sensor 13 zum Erfassen einer die Längenposition des Bandmaterials 3 repräsentierenden Größe. Die von den Sensoren 12, 13 erfassten Dicken- und Längenwerte werden an die elektronische Regeleinheit (ECU) weitergegeben. Die elektronische Regeleinheit dient zur Weiterverarbeitung der gemessenen Dicken- und Längenwerte sowie zur Steuerung der Strahlschneidevorrichtung 9. Das Messen erfolgt vorzugsweise kontinuierlich am vom Coil 8 abgewickelten Bandmaterial 3. Dabei wird jeder Längenposition des Bandmaterials 3 ein Dickenwert zugeordnet, so dass insgesamt das Dickenprofil des Bandes über der Länge erfasst wird. Die Längenwerte und zugehörigen Dickenwerte werden in entspanntem Zustand des abgewickelten Bandmaterials 3 erfasst, das heißt bis auf die erforderliche Vorschubkraft im Wesentlichen kraftfrei.

Wie insbesondere in Figur 2 erkennbar, ist der Abstand L9 zwischen der Messvorrichtung 10 und der Strahlschneidvorrichtung 9 größer als das Doppelte der Länge L2 einer auszuschneidenden Blechplatine 2. Die Konturen der noch auszuschneidenden Blechplatinen 2', 2", 2''' sowie die einzelnen Bandbereiche 14', 14", 14''' je Blechplatine sind in Figur 2 gestrichelt dargestellt. Die Kontur der gerade geschnittenen Blechplatine 2 ist mit durchgezogener Linie dargestellt. Durch den gegebenen Abstand L9 zwischen Messvorrichtung 10 und Schneidvorrichtung 9 kann das Dickenprofil von mindestens zwei Bandbereichen 14', 14" erfasst und für die Festlegung der zu schneidenden Konturen berücksichtigt werden. Auf diese Weise können Längentoleranzen des flexibel gewalzten Bandmaterials 3 ausgeglichen und bei der Herstellung der Blechplatinen 2 berücksichtigt werden. Damit wird die Fertigungsgenauigkeit insgesamt gesteigert beziehungsweise die Ausschussrate vermindert.

Die Kontur der aus dem Bandmaterial 3 auszuschneidenden Blechplatinen 2 ist beliebig und kann entsprechend den geometrischen Vorgaben individuell eingestellt werden. Eine aus dem Bandmaterial 3 ausgeschnittene Platine 2, die auch als dreidimensionale Blechplatinen (3D-TRB) oder Konturschnitt bezeichnet werden können, ist schematisch in Figur 1 gezeigt. Um beliebige Konturen herzustellen, kann die Strahlschneidvorrichtung 9 zumindest entlang zweier oder mehr Achsen X, Y, Z, nämlich in Vorschubrichtung, in Querrichtung und gegebenenfalls in Hochrichtung des Bandmaterials bewegt werden. Dabei kann die Strahlschneidvorrichtung 9 entlang der Achse X unabhängig von der Bewegung entlang der Achse Y und/oder der Achse Z bewegt werden, was analog für die übrigen Achsen (Y, Z) gilt.

Für eine hohe Lagegenauigkeit der auszuschneidenden Platine 2 kann das Bandmaterial 3 während des Strahlschneidens in Längsrichtung L des Bandmaterials gespannt werden. Dies kann mittels einer vor und einer hinter der Strahlschneidvorrichtung 9 angeordneten Vorschubeinrichtung (nicht dargestellt) erfolgen. Die beiden Vorschubeinrichtungen sind dabei so synchronisiert, dass das dazwischenliegende Bandmaterial gespannt ist.

Das Ausschneiden der Blechplatinen 2 aus dem Bandmaterial 3 kann kontinuierlich oder diskontinuierlich durchgeführt werden. Beim kontinuierlichen Prozess erfolgt das Messen und Schneiden während der Vorschubbewegung des Bandmaterials 3. Beim diskontinuierlichen Prozess erfolgt der Vorschub des Bandmaterials in Schritten, wobei das Ausschneiden der Platinen 2 aus dem Bandmaterial 3 bei stillstehendem Band erfolgt. Nach dem Ausschneiden einer oder mehrerer Platinen wird das Bandmaterial zur Herstellung der nächsten Platine beziehungsweise Platinen vorgeschoben.

Hinter der letzten Vorschubeinrichtung können die Konturschnitte und die Materialabfälle durch eine weitere Schneideinheit getrennt, und die Bauteile an ein Transportsystem übergeben werden. Das Transportsystem stellt die Platinen 2 einem Stapelsystem zur Verfügung, welche diese in Kundenbehälter oder auf Paletten stapelt.

Figur 3 zeigt eine Schneideinheit 23 zur Durchführung des Verfahrensschritts S40 in einer abgewandelten Ausführungsform. Diese entspricht weitestgehend der Ausführungsform gemäß Figur 2, so dass hinsichtlich der Gemeinsamkeiten auf die obige Beschreibung Bezug genommen wird. Dabei sind gleiche Einzelheiten mit gleichen Bezugszeichen versehen, wie in Figur 2.

Ein Unterschied der Ausführungsform gemäß Figur 3 besteht darin, dass der Schneidprozess in zwei Teilschritten erfolgt. Im Rahmen des ersten Schneidprozesses wird nur ein Teil der Kontur der Blechplatine 2 geschnitten, so dass die auszuschneidende Platine über mehrere unbeschnittene Stege 15, 15', 15", 15''' mit dem verbleibenden Randbereich des Bandmaterials 3 verbunden bleiben. Das vollständige Trennen der Blechplatine 2 vom verbleibenden Bandmaterial 3 erfolgt im nachgelagerten zweiten Teilschritt mittels einer zweiten Schneidvorrichtung 16. Dabei werden die Stege 15, 15', 15", 15''' mittels der weiteren Schneidvorrichtung 16, die der ersten Schneidvorrichtung 9 in Transportrichtung L des Bandmaterials 3 nachgelagert ist, durchtrennt. In Figur 3 ist erkennbar, dass bei der vorliegenden Ausführung insgesamt vier Stege vorgesehen sind, und zwar einer Steg 15 am vorderen Ende, zwei seitliche Stege 15', 15" und ein Steg 15''' am hinteren Ende. Es versteht sich jedoch, dass je nach Kontur und Größe der zu schneidenden Platine auch eine beliebige andere technisch sinnvolle Zahl von Stegen vorgesehen sein kann. In dem gezeigten Zustand des zweiten Teilschritts sind der vordere Steg 15 und der seitliche Steg 15' mittels der zweiten Schneidvorrichtung 16 bereits durchtrennt worden.

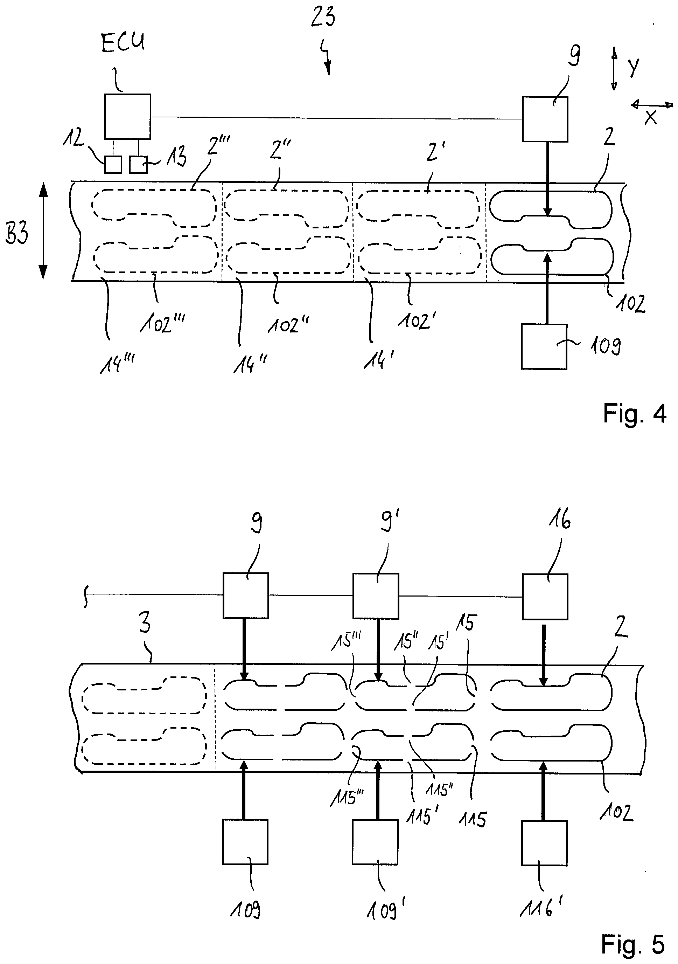

Figur 4 zeigt eine Schneideinheit 23 zur Durchführung des Verfahrensschritts S40 in einer weiteren Ausführungsform. Diese entspricht weitestgehend der Ausführungsform gemäß Figur 2, so dass hinsichtlich der Gemeinsamkeiten auf die obige Beschreibung Bezug genommen wird. Dabei sind gleiche Einzelheiten mit gleichen Bezugszeichen versehen, wie in Figur 2.

Ein Unterschied der Ausführungsform gemäß Figur 4 besteht darin, dass über der Breite B3 des Bandmaterials 3 zwei Reihen von Blechplatinen 2, 102 vorgesehen sind, die aus dem Bandmaterial auszuschneiden sind. Entsprechend sind auch zwei Schneidvorrichtungen 9, 109 vorgesehen, die synchron jeweils eine zugehörige Blechplatine 2, 102 aus dem Bandmaterial ausschneiden. Beide Schneidvorrichtungen 9, 109 werden von der elektronischen Regeleinheit (ECU) auf Basis der von der Messvorrichtung 10 über der Länge erfassten Dicke des Bandmaterials 3 gesteuert.

Bei der vorliegenden Ausführungsform ist ebenfalls vorgesehen, dass die jeweilige Konturlage für die aus dem Bandmaterial 3 herauszuarbeitenden Blechplatinen 2, 102 jeweils in Abhängigkeit von dem gemessenen Dickenverlauf über der Länge von mindestens zwei aufeinander folgenden Platinenbereichen erfolgt. Konkret ist hier vorgesehen, dass der Abstand L9 zwischen der Messvorrichtung 10 und den Strahlschneidvorrichtungen 9, 109 größer als das Dreifache der Länge L2 einer auszuschneidenden Blechplatine 2, 102 ist. Auf diese Weise kann bei der Berechnung der Konturlage der auszuschneidenden Blechplatinen 2, 102 der Blechdickenverlauf von jeweils drei aufeinanderfolgenden Platinenbereichen 14, 14', 14", 14''' berücksichtigt werden.

Figur 5 zeigt eine Schneideinheit 23 zur Durchführung des Verfahrensschritts S40 in einer weiteren Ausführungsform. Diese entspricht weitestgehend der Ausführungsform gemäß Figur 3, so dass hinsichtlich der Gemeinsamkeiten auf die obige Beschreibung Bezug genommen wird. Dabei sind gleiche Einzelheiten mit gleichen Bezugszeichen versehen, wie in Figur 3.

Ein erster Unterschied der Ausführungsform gemäß Figur 5 besteht darin, dass über der Breite B3 des Bandmaterials 3 zwei Reihen von Blechplatinen 2, 102 vorgesehen sind, die aus dem Bandmaterial auszuschneiden sind. Entsprechend sind auch zwei Schneidvorrichtungen 9, 109 vorgesehen, die synchron jeweils eine zugehörige Blechplatine 2, 102 aus dem Bandmaterial ausschneiden. Beide Schneidvorrichtungen 9, 109 werden von der elektronischen Regeleinheit (ECU) auf Basis der von der Messvorrichtung 10 über der Länge erfassten Dicke des Bandmaterials 3 gesteuert. Die Messvorrichtung ist vorliegend der Einfachheit halber nicht gezeigt.

Ein weiterer Unterschied besteht darin, dass der Schneidprozess in zwei Teilschritten erfolgt. Im Rahmen des ersten Schneidprozesses werden je Platinenreihe nur ein Teil der Kontur der jeweiligen Blechplatine 2, 102 geschnitten, so dass die Platine über mehrere unbeschnittene Stege 15, 115 mit dem verbleibenden Randbereich des Bandmaterials 3 verbunden bleiben. Das vollständige Trennen der Blechplatine 2, 102 vom verbleibenden Bandmaterial 3 erfolgt im nachgelagerten zweiten Teilschritt mittels der zweiten Schneidvorrichtung 16, 116. Dabei werden die Stege 15, 115 mittels der weiteren Schneidvorrichtung 16, 116, die der ersten Schneidvorrichtung 9, 109 in Transportrichtung L des Bandmaterials 3 nachgelagert ist, durchtrennt.

Es ist ferner vorgesehen, dass zur Durchführung des ersten Teilschrittes mehrere Schneidvorrichtungen 9, 9'; 109, 109' vorgesehen sind, mit denen zwei aufeinanderfolgende Blechplatinen 2, 2'; 102, 102' synchron bearbeitet werden können. Hierdurch kann die Bearbeitungszeit reduziert werden. Für das im zweiten Teilschritt erfolgende Trennen der Stege 15, 115 genügt je Platinenreihe eine Schneidevorrichtung 16, 116, da die verbleibenden Schnittlängen der zu trennenden Stege 15, 115 nur gering ist. Die ersten Schneidvorrichtungen 9, 109; 9' 109' und die zweiten Schneidvorrichtungen 16, 116 lassen sich mittels der elektronischen Regeleinheit jeweils individuell steuern.

Auch bei der vorliegenden Ausführungsform ist vorgesehen, dass die jeweilige Konturlage für die aus dem Bandmaterial 3 herauszuarbeitenden Blechplatinen 2, 102 jeweils in Abhängigkeit von dem gemessenen Dickenverlauf über der Länge von mindestens zwei aufeinander folgenden Platinenbereichen erfolgt.

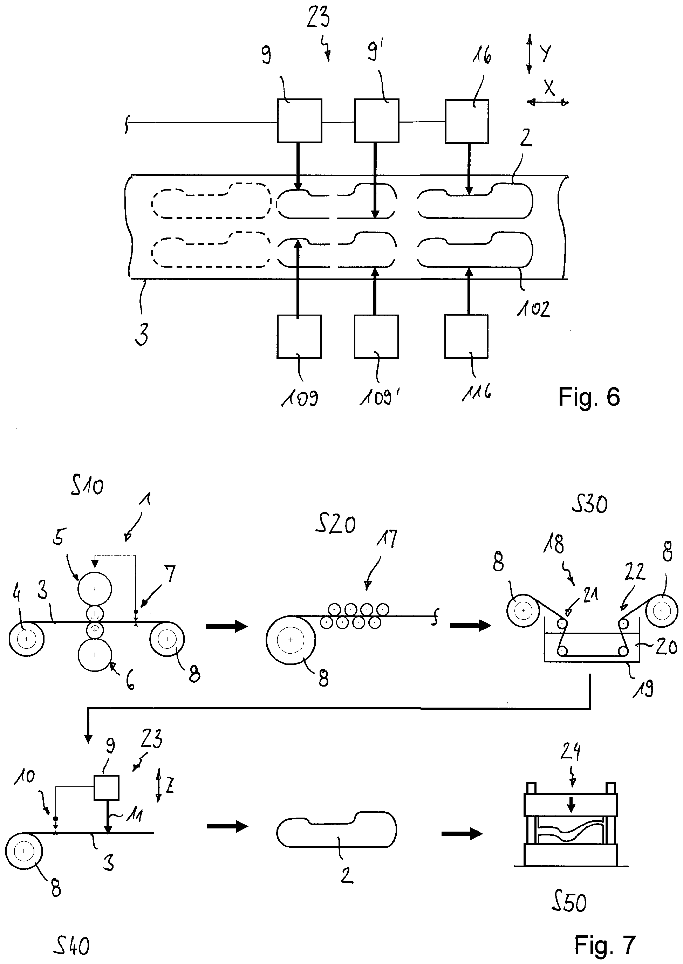

Figur 6 zeigt eine Schneideinheit 23 zur Durchführung des Verfahrensschritts S40 in einer weiteren Ausführungsform. Diese entspricht weitestgehend der Ausführungsform gemäß Figur 5, so dass hinsichtlich der Gemeinsamkeiten auf die obige Beschreibung Bezug genommen wird. Dabei sind gleiche Einzelheiten mit gleichen Bezugszeichen versehen, wie in Figur 5.

Gemeinsamkeiten mit der Ausführungsform nach Figur 5 sind, dass über der Breite B3 des Bandmaterials 3 zwei Reihen von Blechplatinen 2, 102 vorgesehen sind, dass der Schneidprozess in zwei Teilschritten erfolgt und, dass die jeweilige Konturlage für die aus dem Bandmaterial 3 herauszuarbeitenden Blechplatinen 2, 102 jeweils in Abhängigkeit von dem gemessenen Dickenverlauf über der Länge von mindestens zwei aufeinander folgenden Platinenbereichen 14, 14', 14", 14''' erfolgt.

Ein Unterschied der Ausführungsform gemäß Figur 6 besteht darin, dass zur Durchführung des ersten Teilschrittes mehrere Schneidvorrichtungen 9, 9'; 109, 109' vorgesehen sind, mit denen eine Blechplatine 2, 2'; 102, 102' jeweils synchron bearbeitet werden. Dies führt ebenfalls zu einer Reduktion der Bearbeitungszeit gegenüber einer Ausführung mit nur einer Schneidvorrichtung je Platinenreihe. Für das Trennen der Stege 15 ist je Reihe eine Schneidvorrichtung 16, 116 vorgesehen.

Es versteht sich, dass weitere Abwandlungen denkbar sind. Beispielsweise können je nach Breite B3 des Bandmaterials 3 und Größe der auszuschneidenden Blechplatinen 2 auch mehr als zwei Reihen vorgesehen sein. Ferner können die Blechplatinen 2, 102 der verschiedenen Reihen auch gegeneinander versetzt angeordnet sein und/oder unterschiedliche Konturen aufweisen.

In Figur 7 ist ein erfindungsgemäßes Verfahren mit weiteren möglichen Verfahrensschritten gezeigt, die jeweils für sich optional sind.

Nach dem Flexiblen Walzen (S10) kann das Bandmaterial 3 im Verfahrensschritt S20 mittels einer Bandrichteinheit 17 geglättet werden. Bei Bedarf kann das Material auch nach dem Flexiblen Walzen beziehungsweise nach dem Glätten geglüht werden.

Nach dem Flexiblen Walzen (S10) beziehungsweise Glätten (S20) kann das Bandmaterial 3 im Verfahrensschritt S30 mit einem Korrosionsschutz versehen. Hierfür durchläuft das Bandmaterial 3 eine elektrolytische Bandbeschichtungseinheit 18. Es ist erkennbar, dass die Bandbeschichtung im Durchlaufverfahren erfolgt, das heißt das Bandmaterial 3 wird vom Coil 4 abgewickelt, durchläuft die Beschichtungseinheit 18 und wird nach dem Beschichten wieder zum Coil 4 aufgewickelt. Die Bandbeschichtungseinheit 18 umfasst ein Tauchbecken 19, das mit einer elektrolytischen Flüssigkeit 20 gefüllt ist, welche das Bandmaterial 3 durchläuft. Die Führung des Bandmaterials 3 erfolgt mittels Rollensätzen 21, 22.

Bei der vorliegenden Verfahrensführung ist vorgesehen, dass das Bandmaterial nach dem elektrolytischen Beschichten (S30) gemäß dem oben beschriebenen Verfahrensschritt S40 geschnitten wird, wobei einzelne Blechplatinen 2 aus dem Bandmaterial ausgeschnitten werden. Dabei versteht es sich, dass das Herausarbeiten der Blechplatinen gemäß jeder der Ausführungsformen gemäß den Figuren 2 bis 6 erfolgen kann, so dass diesbezüglich abkürzend auf die obige Beschreibung Bezug genommen wird.

Nach dem Erzeugen von Platinen 2 aus dem Bandmaterial 3 kann im Verfahrensschritt S50 ein Umformen der Platine 2 zum gewünschten dreidimensionalen Endprodukt erfolgen. Nach einer ersten Möglichkeit können die Platinen hierfür warmumgeformt oder, nach einer zweiten Möglichkeit, kaltumgeformt werden.

Das Warmumformen kann als direkter oder indirekter Prozess durchgeführt werden. Beim direkten Prozess werden die Platinen 2 vor dem Umformen auf Austenitisierungstemperatur erwärmt, was beispielsweise durch Induktion oder in einem Ofen erfolgen kann. Nach dem Erhitzen auf Austenitisierungstemperatur wird die erhitzte Platine in einem formgebenden Werkzeug 24 umgeformt und gleichzeitig mit hoher Abkühlgeschwindigkeit abgekühlt, wobei das Bauteil seine Endkontur erhält und gleichzeitig gehärtet wird. Beim indirekten Warmumformen wird die Platine 2 vor dem Austenitisieren noch einem Vorformen unterzogen. Das Vorformen erfolgt in kaltem Zustand der Platine, das heißt ohne vorherige Erwärmung. Beim Vorformen erhält das Bauteil ein Profil, das noch nicht der Endform entspricht, aber an diese angenähert ist. Nach dem Vorformen findet dann, wie beim direkten Prozess, ein Austenitisieren und Warmformen statt, wobei das Bauteil seine Endkontur erhält und gehärtet wird.

Alternativ zum Warmumformen als formgebenden Prozess lassen sich die Platinen auch Kaltumformen. Das Kaltumformen eignet sich insbesondere für weiche Karosseriestähle beziehungsweise Bauteile, an die keine besonderen Anforderungen im Hinblick auf die Festigkeit bestehen. Beim Kaltumformen werden die Platinen bei Raumtemperatur umgeformt.

Es versteht sich, dass die gezeigte Verfahrensführung auch abgewandelt werden kann. Beispielsweise kann das elektrolytische Beschichten auch vor dem Flexiblen Walzen oder nach dem Herausarbeiten der Platinen 2 aus dem Bandmaterial, beziehungsweise nach dem Umformen zum Formteil im Wege der Stückbeschichtung vorgenommen werden.

### Bezugszeichenliste

- 1: Walzeinheit
- 2: Blechplatine
- 3: Bandmaterial
- 4: Coil
- 5: Walze
- 6: Walze
- 7: Blechdickenmessung
- 8: Coil
- 9: Schneidvorrichtung
- 10: Messvorrichtung
- 11: Laserstrahl
- 12: Sensor
- 13: Sensor
- 14: Bandbereich
- 15: Steg
- 16: Schneidvorrichtung
- 17: Bandrichteinheit
- 18: Bandbeschichtungseinheit
- 19: Tauchbecken
- 20: Flüssigkeit
- 21: Rollensatz
- 22: Rollensatz
- 23: Schneideinheit
- 24: Umformeinheit

- B: Breite
- L: Länge
- R: Längsrichtung

## Patentansprüche

1. Verfahren zur Herstellung einer Blechplatine, mit den Schritten:
Flexibles Walzen (S10) eines Bandmaterials (3) aus einem metallischen Werkstoff, wobei ein Dickenprofil mit unterschiedlichen Blechdicken über der Länge des Bandmaterials (3) erzeugt wird, derart, dass hintereinanderliegende Bereiche (14, 14', 14", 14''') des flexibel gewalzten Bandmaterials (3) jeweils mit einem Solldickenprofil einer hieraus auszuschneidenden Blechplatine (2, 102; 2', 102'; 2", 102"; 2''', 102''') korrespondieren;
Ermitteln eines Messdickenprofils von mehreren hintereinander liegenden Bereichen (14, 14', 14", 14''') des Bandmaterials (3);
Berechnen einer Sollposition in dem Bandmaterial (3) für eine aus dem Bandmaterial (3) auszuschneidende Blechplatine (2, 102; 2', 102'; 2", 102"; 2''', 102''') in Abhängigkeit von dem generierten Messdickenprofil von zumindest zwei hintereinander liegenden Bereichen (14, 14', 14", 14''') des Bandmaterials (3);
Schneiden des flexibel gewalzten Bandmaterials (3) mittels zumindest einer Schneidvorrichtung (9, 9'; 109, 109'; 16, 116) entlang der Sollposition zum Erzeugen der Blechplatine (2, 2', 2", 2''').

2. Verfahren nach Anspruch 1,
**dadurch gekennzeichnet, dass** das Erfassen der Dicke des Bandmaterials (3) über der Länge des Bandmaterials (3) kontinuierlich erfolgt, wobei jeweils eine Längenposition und eine Dickenposition einander zugeordnet werden.

3. Verfahren nach Anspruch 1 oder 2,
**gekennzeichnet durch**:
Messen der Dicke des Bandmaterials (3) über der Länge des Bandmaterials (3) in einem ersten Bereich (14) des Bandmaterials (3), aus dem eine erste Blechplatine (2) auszuschneiden ist, in einem an den ersten Bereich anschlie-ßenden zweiten Bereich (14') des Bandmaterials (3), aus dem eine zweite Blechplatine (2') auszuschneiden ist, und in einem an den zweiten Bereich (14') anschließenden dritten Bereich (14") des Bandmaterials (3), aus dem eine dritte Blechplatine (2") auszuschneiden ist;
wobei das Berechnen der Sollkonturpositionen für die aus dem Bandmaterial (3) auszuschneidenden ersten Blechplatine (2) und zweiten Blechplatine (2') in Abhängigkeit von dem ermittelten Messdickenprofil von zumindest dem ersten Bereich (14), dem zweiten Bereich (14') und dem dritten Bereich (14") erfolgt.

4. Verfahren nach einem der Ansprüche 1 bis 3,
**dadurch gekennzeichnet, dass** das Bandmaterial (3) während des Schneidens in Längsrichtung des Bandmaterials (3) vorgespannt wird.

5. Verfahren nach einem der Ansprüche 1 bis 4,
**dadurch gekennzeichnet, dass** die zumindest eine Schneidvorrichtung (9, 9'; 109, 109'; 16, 116) entlang mehrerer Achsen unabhängig voneinander positionierbar ist.

6. Verfahren nach einem der Ansprüche 1 bis 5,
**dadurch gekennzeichnet,**
**dass** das Schneiden einer Blechplatine (2, 102; 2', 102'; 2", 102"; 2''', 102''') mittels mehrerer Schneidvorrichtungen (9, 9'; 109, 109'; 16, 116) erfolgt, welche die Blechplatine (2, 102; 2', 102'; 2", 102"; 2''', 102''') gleichzeitig aus dem Bandmaterial (3) ausschneiden und/oder
**dass** mehrere Blechplatinen (2, 102; 2', 102'; 2", 102"; 2''', 102''') gleichzeitig mittels jeweils zumindest einer Schneidvorrichtung (9, 9'; 109, 109'; 16, 116) aus dem Bandmaterial (3) ausgeschnitten werden.

7. Verfahren nach einem der Ansprüche 1 bis 6,
**dadurch gekennzeichnet, dass** das Schneiden derart durchgeführt wird, dass eine strahlgeschnittene Platine (2, 102; 2', 102'; 2", 102"; 2''', 102''') mittels zumindest einem Steg (15, 15', 15", 15'''; 115, 115', 115", 115''') zunächst mit dem Bandmaterial (3) verbunden bleibt.

8. Verfahren nach einem der Ansprüche 1 bis 7,
**dadurch gekennzeichnet, dass** das Schneiden derart erfolgt, dass ein erster Steg (15) in einem in Bezug auf die Bandvorschubrichtung vorderen ersten Drittel der strahlgeschnittenen Platine (2) angeordnet ist und ein zweiter Steg (15''') in einem in Bezug auf die Bandvorschubrichtung hinteren Drittel der strahlgeschnittenen Platine angeordnet ist.

9. Verfahren nach einem der Ansprüche 1 bis 8,
**dadurch gekennzeichnet, dass** der erste Steg (15) und/oder der zweite Steg (15''') sich im Wesentlichen in Längsrichtung des Bandmaterials (3) erstrecken, so dass vom Bandmaterial (3) ausgehende Vorschubkräfte auf die Blechplatine (2) übertragen werden.

10. Verfahren nach einem der Ansprüche 1 bis 9,
**dadurch gekennzeichnet, dass** als weiterer Schritt vorgesehen ist:
Nachschneiden der geschnittenen Blechplatine (2), wobei der zumindest eine Steg (15, 15', 15", 15'''; 115, 115', 115", 115''') durchtrennt wird, so dass die Blechplatine (2, 102) vollständig von einem Restbereich des Bandmaterials (3) abgetrennt wird.

11. Verfahren nach einem der Ansprüche 1 bis 10,
**dadurch gekennzeichnet, dass** das Schneiden mittels zumindest einem Schneidstrahl durchgeführt wird, wobei zumindest ein Schnittparameter des Schneidstrahls in Abhängigkeit von der Blechdicke und/oder den Materialeigenschaften des Bandmaterials gesteuert wird.

12. Anlage zur Herstellung einer Blechplatine, umfassend:
eine Walzeinheit (1) zum Flexiblen Walzen von Bandmaterial (3) aus einem metallischen Werkstoff und
eine Schneideinheit (23) zum Ausschneiden von einzelnen Blechplatinen (2, 102; 2', 102'; 2", 102"; 2''', 102''') aus dem Bandmaterial (3), wobei das Bandmaterial (3) eine Vielzahl von hintereinander liegenden Bereichen aufweist, aus denen jeweils eine Blechplatine (2, 102; 2', 102'; 2", 102"; 2''', 102''') auszuschneiden ist,
wobei die Schneideinheit (23) eine Messvorrichtung (10) zum Erfassen der Dicke des Bandmaterials (3) über der Länge des Bandmaterials (3), zumindest eine Schneidvorrichtung (9, 9'; 109, 109'; 16, 116) zum Schneiden des flexibel gewalzten Bandmaterials (3), und eine elektronische Steuereinheit (ECU) zum Steuern der Schneidvorrichtung (9, 9'; 109, 109'; 16, 116) auf Basis von mittels der Messvorrichtung (10) erfassten Messwerten aufweist,
**dadurch gekennzeichnet,**
**dass** im Betrieb der Abstand (L9) zwischen der Messvorrichtung (10) und der Schneidvorrichtung (9, 9'; 109, 109'; 16, 116) größer als das Doppelte der Länge (L2) einer auszuschneidenden Blechplatine (2, 102; 2', 102'; 2", 102"; 2''', 102''') ist, so dass
eine Sollposition für eine aus dem Bandmaterial (3) herauszuarbeitende Blechplatine (2, 102; 2', 102'; 2", 102"; 2''', 102''') in Abhängigkeit von einem Messprofil von zumindest zwei hintereinander liegenden Bereichen des Bandmaterials (3) bestimmbar ist.

13. Anlage nach Anspruch 12,
**dadurch gekennzeichnet,**
**dass** mehrere Schneidvorrichtungen (9, 9'; 109, 109'; 16, 116) vorgesehen sind, welche derart gestaltet und von der elektronischen Steuereinheit ansteuerbar sind, dass mehrere Blechplatinen (2, 102; 2', 102'; 2", 102"; 2''', 102''') gleichzeitig aus dem Bandmaterial (3) ausgeschnitten werden können und/oder dass mehrere Schneidvorrichtungen (9, 9'; 109, 109'; 16, 116) vorgesehen sind, welche ausgestaltet und von der elektronischen Steuereinheit ansteuerbar sind, um gemeinsam eine Blechplatine (2, 102; 2', 102'; 2", 102"; 2''', 102''') aus dem Bandmaterial (3) auszuschneiden.

14. Anlage nach Anspruch 12 oder 13,
**dadurch gekennzeichnet, dass** eine Transportvorrichtung zum Transportieren des Bandmaterials (3) durch die Messvorrichtung (10) und die Schneidvorrichtung (9, 9'; 109, 109'; 16, 116) vorgesehen ist, wobei die Transportvorrichtung eine Vielzahl von Rollkörpern aufweist, auf denen das Bandmaterial (3) aufliegt.

15. Anlage nach einem der Ansprüche 12 bis 14,
**dadurch gekennzeichnet, dass** eine Vorschubanordnung zum Vorschub des Bandmaterials (3) vorgesehen ist, wobei die Vorschubanordnung eine erste Vorschubvorrichtung aufweist, die vor der Schneidvorrichtung (9, 9'; 109, 109'; 16, 116) angeordnet ist, und eine zweite Vorschubvorrichtung, die hinter der Schneidvorrichtung (9, 9'; 109, 109'; 16, 116) angeordnet ist, wobei die erste und zweite Vorschubvorrichtungen derart steuerbar sind, dass das Bandmaterial (3) dazwischen spannbar ist.

## Claims

1. A process of producing a sheet metal blank, comprising the steps:
flexible rolling (S10) of a strip (3) made of a metal-based material, wherein a thickness profile with different sheet thicknesses along the length of the strip (3) is produced such that successive regions (14, 14', 14", 14''') of the flexibly rolled strip (3) each correspond to a target thickness profile of a sheet metal blank (2, 102; 2', 102'; 2", 102"; 2''', 102''') to be cut out of said strip (3);
determining a measured thickness profile of a plurality of said successive regions (14, 14', 14", 14''') of the strip (3) ;
calculating a target position in the strip (3) for a sheet metal blank (2, 102; 2', 102', 2,", 102", 2''', 102''') to be cut out of the strip (3) depending on the measured thickness profile of at least two successive regions (14, 14'; 14'', 14''') of the strip (3);
cutting the flexibly rolled strip material by at least one cutting device (9, 9'; 109, 109'; 16, 116) along the target position for producing the sheet metal blank (2, 2', 2", 2''').

2. A process according to claim 1,
**characterised in that** determining the thickness of the strip (3) along the length of the strip (3) takes place continuously, wherein in each case a length position and a thickness position are associated with one another.

3. A process according to claim 1 or 2,
**characterised by**
measuring the thickness of the strip (3) along the length of the strip (3) in a first region (14) of the strip (3) out of which a first sheet metal blank (2) is to be cut, and in a second region (14') of the strip (3) which adjoins the first region (14) and out of which a second sheet metal blank (2') is to be cut, and in a third region (4") of the strip (3) which adjoins the second region (14') of the strip (3) and out of which a third sheet metal blank (2") is to be cut,
wherein calculating the target position for the first sheet metal blank (2) and second sheet metal blank (2') to be cut out of the strip (3) takes place depending on the measured thickness profile of at least the first region (14), the second region (14') and the third region (14").

4. A process according to any one of claims 1 to 3,
**characterised in that** the strip (3) is pre-tensioned in the longitudinal direction while being cut.

5. A process according to any one of claims 1 to 4,
**characterised in that** the at least one cutting device (9, 9'; 109, 109', 16, 116) can be positioned along a plurality of axes independently of one another.

6. A process according to any one of claims 1 to 5,
**characterised in**
**that** cutting a sheet metal blank (2, 102; 2', 102'; 2", 102"; 2''', 102''') is effected by a plurality of cutting devices (9, 9'; 109, 109'; 16, 116), which cut the sheet metal blank (2, 102; 2', 102', 2", 102", 2''', 102''') simultaneously out of the strip (3) and/or
**that** a plurality of the sheet metal blanks (2, 102; 2', 102', 2", 102", 2''', 102''') are cut out of the strip (3) simultaneously by at least one cutting device (9, 9'; 109, 109'; 16, 116).

7. A process according to any one of claims 1 to 6,
**characterised in that** the cutting is effected such that a beam-cut sheet metal blank (2, 102; 2', 102', 2", 102"; 2''', 102''') initially remains connected to the strip (3) by at least one web (15, 15'; 15'', 15'''; 115, 115', 115", 115''').

8. A process according to any one of claims 1 to 7,
**characterised in that** the cutting takes place such that a first web (15), with reference to the strip feeding direction, is arranged in a front first third of the beam-cut sheet metal blank (2), and a second web (15'''), with reference to the strip feeding direction, is arranged in a rear third of the beam-cut sheet metal blank (2).

9. A process according to any one of claims 1 to 8,
**characterised in that** the first web (15) and/or the second web (15") extend substantially in the longitudinal direction of the strip (3) so that any feed forces of the strip (3) are transmitted to the sheet metal blank (2).

10. A process according to any one of claims 1 to 9,
**characterised in that** a further step is provided: re-cutting the cut sheet metal blank (2), wherein the at least one web (15, 15', 15", 15''', 115, 115', 115", 115''') is cut through, so that the sheet metal blank (2, 102) is completely separated from a residual region of the strip (3).

11. A process according to any one of claims 1 to 10,
**characterised in that** the cutting is effected by at least one cutting beam, wherein at least one cutting parameter of the cutting beam is controlled depending on the sheet thickness and/or of the material properties of the strip.

12. A plant for producing a sheet metal blank, comprising:
a rolling unit (1) for flexibly rolling a strip (3) made of a metal-based material, and
a cutting unit (23) for cutting individual sheet metal blanks (2, 102; 2', 102'; 2", 102"; 2''', 102''') out of the strip (3), wherein the strip (3) comprises a plurality of successive regions out of each of which a sheet metal blank (2, 102; 2', 102'; 2", 102"; 2''', 102''') is to be cut,
wherein the cutting unit (23) comprises a measuring device (10) for measuring the thickness of the strip (3) along the length of the strip (3), at least one cutting device (9, 9'; 109, 109'; 16, 116) for cutting the flexibly rolled strip (3), and an electronic control unit (ECU) for controlling the cutting device (9, 9'; 109, 109'; 16 , 116) on the basis of values measured by the measuring device (10),
**characterised in that** during operation the distance (L9) between the measuring device (10) and the cutting device (9, 9'; 109, 109'; 16, 116) is greater than double the length (L2) of a sheet metal blank (2, 102; 2' 102', 2", 102"; 2''', 102''') to be cut out, so that it is possible to determine a target position for a sheet metal blank (2, 102; 2', 102'; 2", 102"; 2''', 102''') to be worked out of the strip (3) depending on a measured profile of at least two successive regions of the strip (3).

13. A plant according to claim 12,
**characterised in**
**that** several cutting devices (9, 9'; 109, 109"; 16, 116) are provided which are designed and controllable by the electronic control unit such that several sheet metal blanks (2, 102; 2', 102'; 2", 102", 2''', 102") can be cut simultaneously out of the strip (3);
and/or
**that** several cutting devices (9, 9', 109, 109', 16, 116) are provided which are designed and controllable by the electronic control unit so as to jointly cut a sheet metal blank (2, 102; 2', 102'; 2", 102''; 2''', 102''') out of the strip (3).

14. A plant according to claim 12 or 13,
**characterised in that** a transport device is provided for transporting the strip (3) through the measuring device (10) and the cutting device (9, 9'; 109, 109'; 16, 116), wherein the transport device comprises a plurality of rolling contact members on which the strip (3) is supported.

15. A plant according to any one of claims 12 to 14,
**characterised in that** a feed arrangement is provided for feeding the strip (3), wherein the feed arrangement comprises a first feed device which is arranged in front of the cutting device (9, 9'; 109, 109'; 16, 116) and a second feed device, which is arranged behind the cutting device (9, 9'; 109, 109', 16, 116), wherein the first feed device and the second feed device are controllable such that the strip (3) is tensionable between same.

## Revendications

1. Procédé pour la fabrication d'une platine de tôle, avec les étapes suivantes :
le laminage flexible (S10) d'un feuillard (3) en un matériau métallique, dans lequel un profil d'épaisseur avec différentes épaisseurs de tôle est généré sur la longueur du feuillard (3) de sorte que des zones (14, 14', 14", 14''') situées les unes derrière les autres du feuillard (3) laminé de façon flexible correspondent respectivement à un profil d'épaisseur de consigne d'une platine de tôle (2, 102 ; 2', 102' ; 2", 102"; 2''', 102''') à découper à partir de celles-ci;
la détermination d'un profil d'épaisseur de mesure de plusieurs zones (14, 14', 14", 14''') situées les unes derrière les autres du feuillard (3) ;
le calcul d'une position de consigne dans le feuillard (3) pour une platine de tôle (2, 102 ; 2', 102' ; 2", 102"; 2''', 102''') à découper à partir du feuillard (3) en fonction du profil d'épaisseur de mesure généré d'au moins deux zones (14, 14' ; 14", 14''') situées l'une derrière l'autre du feuillard (3) ;
le découpage du feuillard (3) laminé de façon flexible au moyen d'au moins un dispositif de découpage (9, 9' ; 109, 109'; 16, 116) le long de la position de consigne pour la production de la platine de tôle (2, 2', 2", 2''').

2. Procédé selon la revendication 1, **caractérisé en ce que** la détection de l'épaisseur du feuillard (3) s'effectue en continu sur la longueur du feuillard (3), dans lequel respectivement une position en longueur et une position d'épaisseur sont associées l'une à l'autre.

3. Procédé selon la revendication 1 ou 2, **caractérisé par** :
la mesure de l'épaisseur du feuillard (3) sur la longueur du feuillard (3) dans une première zone (14) du feuillard (3) à partir de laquelle une première platine de tôle (2) doit être découpée, dans une deuxième zone (14') du feuillard (3) en jonction avec la première zone à partir de laquelle une deuxième platine de tôle (2') doit être découpée, et dans une troisième zone (14") du feuillard (3) en jonction avec la deuxième zone (14') à partir de laquelle une troisième platine de tôle (2") doit être découpée ;
dans lequel le calcul des positions de contour de consigne pour la première platine de tôle (2) et la deuxième platine de tôle (2') à découper à partir du feuillard (3) s'effectue en fonction du profil d'épaisseur de mesure déterminé au moins de la première zone (14), la deuxième zone (14') et la troisième zone (14").

4. Procédé selon l'une des revendications 1 à 3, **caractérisé en ce que** le feuillard (3) est précontraint pendant le découpage en direction longitudinale du feuillard (3).

5. Procédé selon l'une des revendications 1 à 4, **caractérisé en ce que** l'au moins un dispositif de découpage (9, 9'; 109, 109' ; 16, 116) peut être positionné le long de plusieurs axes indépendamment les uns des autres.

6. Procédé selon l'une des revendications 1 à 5, **caractérisé en ce que** le découpage d'une platine de tôle (2, 102 ; 2', 102' ; 2", 102" ; 2''', 102''') s'effectue au moyen de plusieurs dispositifs de découpage (9, 9' ; 109, 109' ; 16, 116) qui découpent simultanément la platine de tôle (2, 102 ; 2', 102' ; 2", 102" ; 2''', 102''') à partir du feuillard (3) et/ou que plusieurs platines de tôle (2, 102 ; 2', 102' ; 2", 102"; 2''', 102''') sont découpées simultanément au moyen respectivement d'au moins un dispositif de découpage (9, 9' ; 109, 109' ; 16, 116) à partir du feuillard (3).

7. Procédé selon l'une des revendications 1 à 6, **caractérisé en ce que** le découpage est réalisé de manière à ce qu'une platine (2, 102 ; 2', 102'; 2", 102"; 2''', 102''') découpée au rayon reste tout d'abord reliée au feuillard (3) au moyen d'au moins une nervure (15, 15', 15", 15'''; 115, 115', 115", 115''').

8. Procédé selon l'une des revendications 1 à 7, **caractérisé en ce que** le découpage s'effectue de manière à ce qu'une première nervure (15) est disposée dans un premier tiers avant par rapport à la direction d'avance de feuillard de la platine (2) découpée au rayon et qu'une deuxième nervure (15''') est disposée dans un tiers arrière par rapport à la direction d'avance de feuillard de la platine découpée au jet.

9. Procédé selon l'une des revendications 1 à 8, **caractérisé en ce que** la première nervure (15) et/ou la deuxième nervure (15''') s'étendent sensiblement en direction longitudinale du feuillard (3) de sorte que des efforts d'avance partant du feuillard (3) sont transmis à la platine de tôle (2).

10. Procédé selon l'une des revendications 1 à 9, **caractérisé en ce que** l'on prévoit, en guise d'autre étape :
le redécoupage de la platine de tôle (2) découpée, dans lequel l'au moins une nervure (15, 15', 15", 15'''; 115, 115', 115", 115''') est sectionnée de sorte que la platine de tôle (2, 102) est complètement sectionnée d'une zone résiduelle du feuillard (3).

11. Procédé selon l'une des revendications 1 à 10, **caractérisé en ce que** le découpage s'effectue au moyen d'au moins un rayon de coupe, dans lequel au moins un paramètre de coupe du jet de coupe est commandé en fonction de l'épaisseur de tôle et/ou des propriétés de matériau du feuillard.

12. Installation pour la fabrication d'une platine de tôle, comprenant :
une unité de laminage (1) pour le laminage flexible d'un feuillard (3) en un matériau métallique et
une unité de découpage (23) pour le découpage de platines de tôle (2, 102 ; 2', 102' ; 2", 102"; 2"', 102''') individuelles à partir du feuillard (3), dans lequel le feuillard (3) présente une pluralité de zones situées les unes derrière les autres à partir desquelles respectivement une platine de tôle (2, 102 ; 2', 102'; 2", 102"; 2''', 102''') doit être découpée,
dans lequel l'unité de découpage (23) présente un dispositif de mesure (10) pour détecter l'épaisseur du feuillard (3) sur la longueur du feuillard (3), au moins un dispositif de découpage (9, 9' ; 109, 109'; 16, 116) pour découper le feuillard (3) laminé de façon flexible, et une unité de commande électronique (ECU) pour la commande du dispositif de découpage (9, 9' ; 109, 109' ; 16, 116) sur la base de valeurs de mesure détectées au moyen du dispositif de mesure (10),
**caractérisée en ce que**, lors du fonctionnement, la distance (L9) entre le dispositif de mesure (10) et le dispositif de découpage (9, 9'; 109, 109' ; 16, 116) est supérieure au double de la longueur (L2) d'une platine de tôle (2, 102 ; 2', 102' ; 2", 102"; 2''', 102''') à découper, de sorte qu'une position de consigne pour une platine de tôle (2, 102 ; 2', 102' ; 2", 102" ; 2''', 102''') à dégrossir à partir du feuillard (3) peut être déterminée en fonction d'un profil de mesure d'au moins deux zones situées l'une derrière l'autre du feuillard (3).

13. Installation selon la revendication 12, **caractérisée en ce que** plusieurs dispositifs de découpage (9, 9'; 109, 109' ; 16, 116) sont prévus, lesquels sont configurés et peuvent être commandés par l'unité de commande électronique de manière à ce que plusieurs platines de tôle (2, 102 ; 2', 102' ; 2", 102"; 2''', 102''') puissent être découpées simultanément à partir du feuillard (3) et/ou que plusieurs dispositifs de découpage (9, 9' ; 109, 109' ; 16, 116) sont prévus, lesquels sont configurés et peuvent être commandés par l'unité de commande électronique pour découper en commun une platine de tôle (2, 102 ; 2', 102' ; 2", 102"; 2''', 102''') à partir du feuillard (3).

14. Installation selon la revendication 12 ou 13, **caractérisée en ce qu'**un dispositif de transport est prévu pour transporter le feuillard (3) à travers le dispositif de mesure (10) et le dispositif de découpage (9, 9' ; 109, 109' ; 16, 116), dans laquelle le dispositif de transport présente une pluralité de corps de roulement sur lesquels le feuillard (3) repose.

15. Installation selon l'une des revendications 12 à 14, **caractérisée en ce que** l'on prévoit un agencement d'avance pour l'avance du feuillard (3), dans laquelle l'agencement d'avance présente un premier dispositif d'avance disposé devant le dispositif de découpage (9, 9' ; 109, 109' ; 16, 116) et un deuxième dispositif d'avance disposé derrière le dispositif de découpage (9, 9' ; 109, 109'; 16, 116), dans laquelle les premier et deuxième dispositifs d'avance peuvent être commandés de manière à ce que le feuillard (3) puisse être tendu entre eux.
